# EUROPEAN PATENT SPECIFICATION

(11) **EP 0 430 294 B1**
(45) Date of publication and mention of the grant of the patent: **21.06.1995**
(21) Application number: 90123001.1
(22) Date of filing: 30.11.1990
(51) Int. Cl.: G01M 13/02

(54) **System for simulating power plant of automotive vehicle utilizing electrically powered high inertia power plant**
System zur Simulation von Fahrzeugantrieben unter Verwendung von elektrisch betriebenen Antrieben hoher Trägheit
Système de simulation du moteur d'un véhicule automobile utilisant un moteur à grande inertie actionné électriquement

(30) Priority: 30.11.1989 JP 310882/89; 30.11.1989 JP 310887/89; 30.11.1989 JP 310888/89
(43) Date of publication of application: 05.06.1991
(73) Proprietor: Kabushiki Kaisha Meidensha, Shinagawa-ku Tokyo (JP)
(72) Inventor: Sano, Kaoru, Fujinomiya-shi, Shizuoka-ken (JP); Mizushina, Fumio, Fuji-shi, Shizuoka-ken (JP); Goto, Takashi, Shizuoka-shi, Shizuoka-ken (JP); Maruki, Toshimitsu, Numazu-shi, Shizuoka-ken (JP); Naganuma, Yukio, Meidensha-Osakiryo, Tokyo (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- US-A- 4 064 747
- US-A- 4 758 967

## Description

### Field of the invention

The invention relates generally to a bench testing apparatus for testing vehicular components, such as an automatic power transmission, to be associated with an internal combustion engine. More specifically, the invention relates to a bench testing apparatus utilizing an electrically powered driving source, such as an electric motor, which is suitable for bench testing vehicular components, such as an automatic power transmission.

### Description of the Background Art

Japanese Patent First (unexamined) Publications (Tokkai) Showa 58-38833 and 61-53541 disclose a bench testing system for automatic power transmission. In the disclosed system, an electric motor, a hydrostatic motor and so forth, are employed as substitute power or driving sources in place of an automotive internal combustion engine. As can be appreciated, because of much higher inertia of the electric motor, hydrostatic motor and other substitute power or driving sources in comparison with the automotive internal combustion engines, the substitute power or driving source is combined with speed increasing devices. Such an automotive engine simulation system is useful for durability test, static characteristics test and so forth. However, due to substantially high inertia moment, it is practically difficult to simulate transition characteristics of shifting at transmission speed ratio and so forth. For instance, the electric motor has approximately 10 times higher inertia magnitude than that of the automotive engine.

A further bench testing system employing a high inertia electric motor drive is disclosed in US-A-4 758 967. In this system the transmission of an automotive power train is driven directly by an input motor whose rotational inertia about the axis of the shaft that connects the motor and transmission input is represented by a flywheel. In addition, the transmission output shaft is connected to an output motor through a velocity, displacement or acceleration transducer and a torque transducer. The signals produced by the transducers are applied to a computer. The computer has stored in its memory an algorithm from which can be calculated the torque correction to produce as output a new torque command which is applied to the output motor drive. In response to the new torque command the output motor drive produces a new output torque signal from which the motor develops an output torque which resists the torque produced by the input motor. The disclosure is, however, silent in respect of driving the transmission by means of a low inertia driving source as required by the present invention in order to successfully simulate the automotive internal combustion engine before the transmission is associated therewith. The present invention provides the advantage that the low inertia of the driving source is controlled to correspond to that of the internal combustion engine such that the responsive characteristics of the torque and rotary speed of the engine coincide with those of the torque and rotary speed of the driving means. The advantage is important in testing the transmission in respect of gear shifting since a high rotational inertia of the driving means has a detrimental effect on the formation of shift shock when the transmission is tested to that end.

For designing automatic power transmissions with enhanced shift feeling, reduced shift shock and so forth, it is essential to obtain data of transition characteristics of the power or driving source to be actually combined.

Therefore, Tokkai Showa 61-53541 as identified above, employs a strategy of correction of command current for the electric motor. With the corrected command current, the output torque of the electric motor becomes substantially corresponding to the engine output torque to be output in response to a torque demand. Such approach is generally successful in avoiding influence of high inertia of the high inertia power or driving source.

In the practical simulation, the automotive engine is simulated in terms of given parameters, such as an engine speed, a throttle valve open angle and so forth. Namely, in order to simulate the automotive engine transition characteristics for performing bench testing of an automatic power transmission, an engine speed and a throttle valve open angle are used as parameters for simulation, therefore, in an engine characteristics generator torque demand is set in terms of the engine speed indicative signal and a throttle valve open angle indicative signal to control the high inertia power or driving source, i.e. electric motor. When shift control parameters for controlling shifting transmission gear ratio in the automatic power transmission are common to those used for simulating the engine characteristics, such approach is successfully introduced for performing bench testing. However, on the other hand, when the shift control parameters are different from that utilized for simulating the engine characteristics, difficulties are encountered in performing bench testing. Therefore, it is desirable to provide a simulated engine characteristics generator which can perform bench testing of the automatic power transmissions irrespective of the shifting control parameters thereof.

On the other hand, in the case that the shift control system of the automatic power transmission employs an intake air pressure as one of shift control parameters, it becomes necessary to provide a simulated intake air pressure indicative data corresponding to the simulating condition of the engine.

Furthermore, in the modern and advanced automatic transmission technologies, transmission gear ratio shifting pattern and/or shifting schedule is set as a variable depending upon various additional parameters. For instance, in some of the shift control systems, it becomes necessary to provide data simulating environmental conditions, such as atmospheric pressure which is variable depending upon altitude. Since the intake air density to be introduced into the automotive engine is variable for causing variation of the engine output characteristics, some of the environmental conditions also affect the engine output characteristics. Therefore, for such type of the automatic power transmission, it becomes essential to simulate engine characteristics with taking the environmental condition indicative parameter or parameters as simulation parameter or parameters.

### SUMMARY OF THE INVENTION

Therefore it is an object of the present invention to provide a bench testing apparatus for testing vehicular components, such as an automatic power transmission, associated with an automotive internal combustion engine irrespective of control parameters set for controlling the vehicular components.

According to one aspect of the invention there is provided a bench testing apparatus for testing a vehicular component to be associated with an automotive internal combustion engine, said apparatus comprising a driving source adapted to drive said vehicular component and a dummy load drivable by an output of said vehicular component, the operational state of said vehicular component being controlled in dependence upon preselected control parameters, characterized in that said bench testing apparatus comprises a) a low rotational inertia driving source which is constructed to generate a driving torque simulating an engine output, said driving source cooperating with said associated vehicular component to be tested for supplying said driving torque and having an electric motor and a speed increasing device so that a low rotational inertia equivalent to a rotational inertia of the automotive combustion engine is achieved; b) an engine characteristics generator which is constructed to receive data simulating operation of said internal combustion engine for the derivation of a control signal for commanding an output torque of said low inertia driving source according to a predetermined engine output torque variation characteristic which is memorized in terms of said simulating data; and c) means for generating at least one control parameter associated with a simulated engine operating condition and for using said control parameter to control said associated vehicular component.

In the preferred construction, the data simulating engine operation is provided as a value of a physical force. The data may be an intake vacuum pressure simulated correspondingly to the simulated engine operating parameter data. The predetermined engine operation parameter simulated data may be engine speed data and a throttle valve opening angle data.

According to a further aspect of the invention there is provided a method for simulating operation of an automotive internal combustion engine, characterized by the following steps of a) generating an engine output torque simulating driving torque by means of a low inertia driving source; b) deriving a control signal for commanding an output torque of said low inertia driving source in terms of given engine simulating parameters according to a predetermined engine output torque variation characteristic which is set in terms of said engine simulating parameters for simulating engine operation at a predetermined engine driving condition represented by said given engine simulating parameters; and c) deriving a correction value based on an environmental condition for correcting said control signal.

### BRIEF DESCRIPTION OF THE DRAWINGS

The present invention will be understood more fully from the detailed description given herebelow and from the accompanying drawings of the preferred embodiments of the invention, which, however, should not be taken to limit the invention to the specific embodiments but are for explanation and understanding only.

In the drawings:
Fig. 1 is a block diagram of the first embodiment of a bench testing apparatus, according to the present invention;
Fig. 2 is a flowchart of a simulation control routine for performing simulation of the engine characteristics;
Fig. 3 is a chart showing output characteristics of the bench testing apparatus of Fig. 1;
Fig. 4 is a block diagram of the second embodiment of the bench testing apparatus according to the present invention;
Fig. 5 is a chart showing variation of a simulated pressure and intake air pressure;
Fig. 6 is a block diagram of the third embodiment of the bench testing apparatus according to the present invention;
Figs. 7 and 8 are charts showing different engine characteristics; and
Figs. 9) and 10 are explanatory chart showing manner of derivation of intake air pressure indicative parameter.

### DESCRIPTION OF THE PREFERRED EMBODIMENT

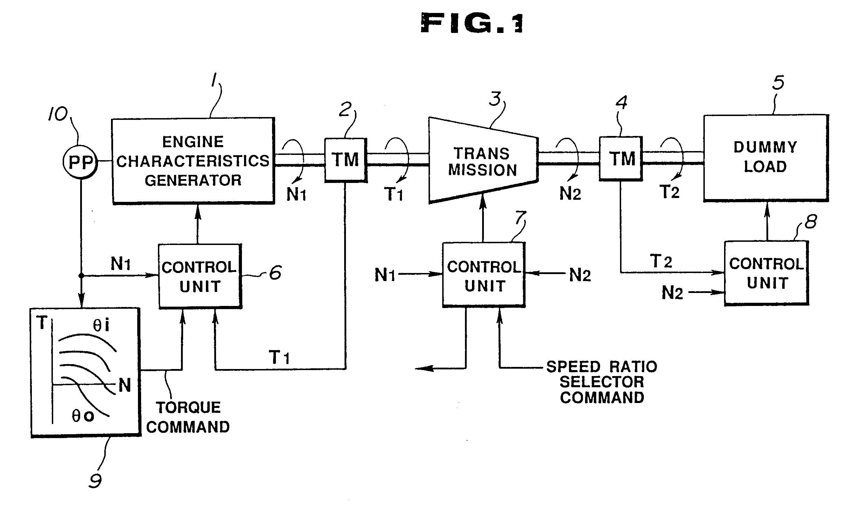

Referring now to the drawings, particularly to Fig. 1, there is illustrated a dynamometer for bench testing an automotive automatic power transmission utilizing the preferred embodiment of a bench testing apparatus according to the invention. The shown embodiment of the automatic power transmission employs a low inertia power or driving source 1. The low inertia power source 1 comprises a direct current motor which is associated with a thyristor-Leonard type current control minor loop. The direct current motor may be further associated with a speed increasing device for compensating high inertia of the direct current motor. The motor is controlled by current command or torque command generated by the thyristor-Leonard type minor loop. The low inertia power source has been disclosed in the co-pending U. S. Patent Application Serial Nos. 427,031 filed on October 25, 1990, (corresponds to US-A 5 060 176, issued on 22.10.1991) and 436,298 filed on November 13, 1990 (corresponds to EP-A- 0 369 747 published on 23.5.1990 and US-A- 4 984 988 issued on 15.1.1991). The disclosure of the above-identified co-pending U. S. Patent Applications is herein incorporated by reference for the sake of disclosure. The low inertia or driving source is used in place of the normal motor as recited in the prior art reference US-A- 4 758 967.

The low inertia power source 1 has an output shaft which is connected to an automatic power transmission 3 to be tested. Therefore, the automatic power transmission 3 is driven by the output of the low inertia power source 1. Output shaft of the automatic power transmission 3 is connected to a dummy load 5 via a torque meter 4. As the dummy load 5, a torque absorbing dynamometer 5 including a flywheel is utilized.

For controlling the low inertia power source 1, the automatic power transmission 3 and the dynamometer 5, respectively separate control units 6, 7 and 8 are provided. For the control unit 6, torque command or speed command is applied for performing torque or speed control. The control unit 6 also receives a torque indicative signal T₁ representative of the output torque of the low inertia power source 1 from the torque meter 2. Therefore, the control unit 6 performs feedback control of the low inertia power source by supplying a torque control signal which adjusts the output torque to reduce the difference between the commanded torque indicated in the torque command and the actual output torque indicated in the torque indicative signal T₁.

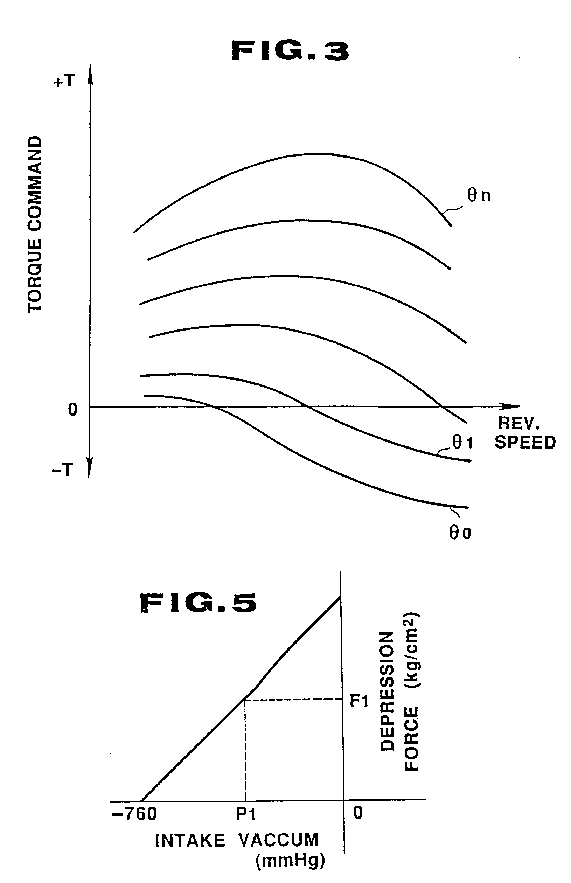

The torque command is generated by the preferred embodiment of an engine characteristics generator 9, according to the invention. The engine characteristics generator 9 comprises a microprocessor based unit. The engine characteristics generator 9 is set to output torque characteristics in relation to a revolution speed N, as shown in Fig. 1. As can be seen from Fig. 1, the output torque characteristics are set relative to respective throttle valve open angle ϑᵢ. Respective output torque characteristics may be set through experiments. The engine characteristics generator 9 processes the throttle valve open angle data ϑᵢ and a revolution speed indicative data N which is supplied from a revolution speed sensor 10. On the basis of the throttle valve open angle data ϑᵢ and a revolution speed indicative data N, the torque command valve is derived according to the set output torque characteristics of Fig. 3.

It should be appreciated that, though the shown embodiment employs the throttle valve open angle data ϑ₁ as an engine load indicative data, an intake air vacuum pressure can be utilized.

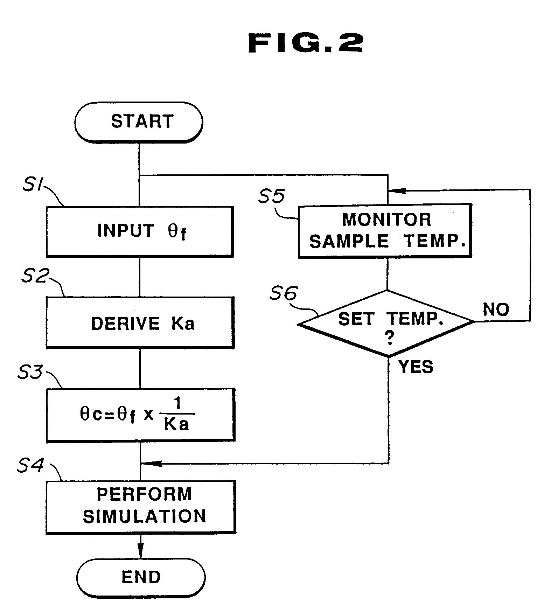

Fig. 2 shows a flowchart showing operation of the engine characteristics generator 9. For the microprocessor in the engine characteristics generator 9, steady state data ϑ_{f} which corresponds to the engine output characteristics at a constant open angle of the throttle valve at a predetermined standard engine condition is input, at a step S₁. The steady state data ϑ₁ corresponds to the characteristics of ϑ₀ to ϑₙ in Fig. 3. These steady state data are set on the basis of the engine performance test data under standard atmospheric pressure. It is also possible to set the steady state data ϑ₁ by arithmetically correcting the test data in terms of the atmospheric test condition so as to obtain the data under standard atmospheric condition. Arithmetic correction may be performed according to the following equation as defined in JIS D1001-1982:

${\text{T₀ = K}}_{\text{a}} {\text{· T}}_{\text{e}} \text{(1)}$

${\text{K}}_{\text{a}} {\text{= {P}}_{\text{o}} {\text{/P}}_{\text{a}} {\text{- P}}_{\text{w}} {\text{)}}}^{\text{1.2}} {\text{x {(273 + t}}_{\text{d}} {\text{)/(273 + t₀)}}}^{\text{0.8}} \text{(2)}$

wherein
- T₀ is: corrected output torque;
- Kₐ is: correction coefficient S;
- Tₑ is: standard torque data
- Pₒ is: standard dry-bulb pressure;
- Pₐ is: total atmospheric pressure;
- P_{w} is: vapor composite pressure in atmosphere
- t_{d} is: intake air temperature
- tₒ is: standard atmospheric temperature (25°C)
As can be appreciated herefrom, the corrected output torque can be obtained by correcting the standard torque data with the correction coefficient.

At a step S₂, environment setting data for defining testing environmental condition is input. Practically, the environment setting data represents the pressure data Pₒ. Based on the input pressure data Pₒ, the correction coefficient Kₐ is derived. Subsequently, at a step S₃, the steady state data ϑ_{f} are corrected. Practically, correction for the steady state data is performed by multiplying 1/Kₐ for the steady state data ϑ_{f}.

${\text{ϑ}}_{\text{c}} {\text{= ϑ}}_{\text{f}} {\text{x (1/K}}_{\text{a}} \text{) (3)}$

By correction set forth above, respective steady state data ϑ _{f} set in the step S₁ are modified to be adapted to the set testing condition. Therefore, by inputting desired testing condition data (Pₒ), any desired testing condition can be simulated. At a step S₄, engine output characteristics simulation is performed by supplying the torque command to the control unit 6 set forth above. Therefore, in the shown embodiment, bench testing of the automatic power transmission can be performed under any desired test conditions.

For further precision of bench testing the automatic power transmission, it is desirable to set testing condition including temperature condition. However, since influence of atmospheric pressure and temperature for performance of the automatic power transmission is substantially small, it would be sufficient to incorporate the factor of temperature condition in the test condition. Therefore, in the shown process, environmental temperature of the automatic power transmission is temporarily adjusted to a desired testing temperature by means of a cooler, heater or air conditioner unit, at a step S₅. Then, at a step S₆, testing temperature at the environment of the automatic power transmission to be tested is set. By this, further precise bench testing of the automatic power transmission can be performed.

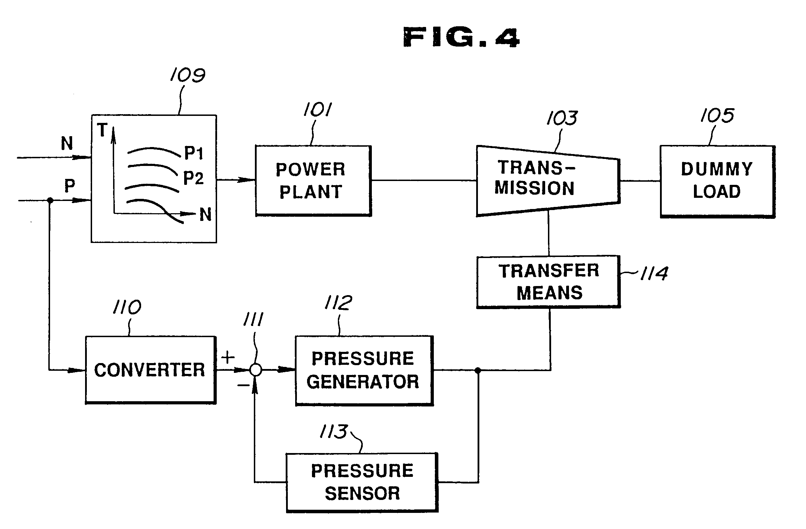

In the case of an automatic power transmission which employs an intake vacuum pressure as one of the shift control parameter, it is essential to simulate intake vacuum pressure according to the driving condition of the low inertia power source 1. System for bench testing the automatic power transmission which requires the intake vacuum pressure data for shifting control, is illustrated in Fig. 4 in a form of simplified block diagram.

As can be seen from Fig. 4, a low inertia power source 101 has similar construction discussed with respect to the former embodiment. Namely, the low inertia power source 101 employs an electric motor as prime mover. The low inertia power source 101 is controlled by an engine characteristics generator 109. For simulating the engine operation, the engine characteristics generator 109 is supplied with an engine speed indicative data N and an intake vacuum pressure indicative data P. As can be seen, the engine characteristics generator 109 is set a plurality of engine output characteristics P₁, P₂ ... variable in relation to the engine speed N. The engine characteristics generator 109 derives a torque command to control operation of the low inertia power source 101.

The low inertia power source 101 is connected to the automatic power transmission 103 to be tested for supplying the engine output simulated output torque. The automatic power transmission 103 is connected to a dummy load 105 to supply thereto the output torque.

The intake vacuum pressure P is supplied to a converter 110. The converter 110 converts the intake vacuum indicative data P into a depression force indicative data. The converter 110 outputs the depression force indicative data to an adder 111. The adder 111 is connected to a pressure generator 112 which generates simulated pressure corresponding to the intake vacuum pressure at the simulated engine operating condition. The simulated pressure generated by the pressure generator 112 is monitored by a pressure sensor 113. The pressure sensor 113 generates a simulated pressure indicative signal to be fedback to the adder 111. The adder 111 receives the depression force indicative data at a non-inverting input and the fedback simulated pressure indicative signal at an inverting input. Therefore, the adder 111 supplies a difference signal representative of the difference between the depression force indicative data and the simulated pressure indicative signal.

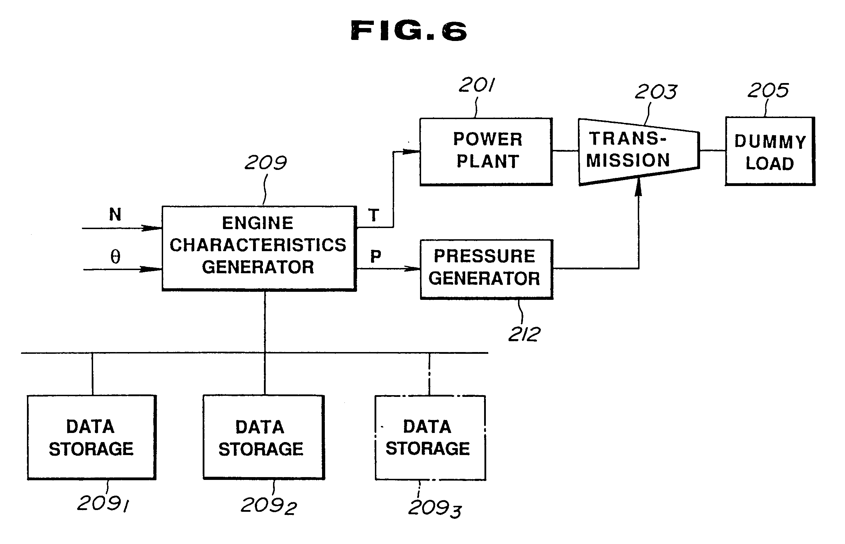

As shown in Fig. 5, the depression force indicative data is set in relation to the intake vacuum pressure. Namely, as can be seen from Fig. 5, the depression force F (kg/cm²) is increased according to decreasing of the intake vacuum pressure P. The pressure generator 112 comprises a pressure generating actuator which is constituted by a pressure controller and a master cylinder for generating a fluid pressure, such as a hydraulic pressure, at the magnitude corresponding to the value of the depression force indicative data. The pressure thus generated is transferred to the automatic power transmission to be tested via a pressure transferring means 114, such as an output shaft of the pressure generator 112 for which the generated pressure is exerted.

Fig. 6 shows the third embodiment of the bench testing system including the preferred embodiment of the engine characteristics simulation system, according to the present invention. The shown embodiment is designed to adapt the engine characteristics simulation system to various types of automatic power transmissions having mutually different shift control parameters.

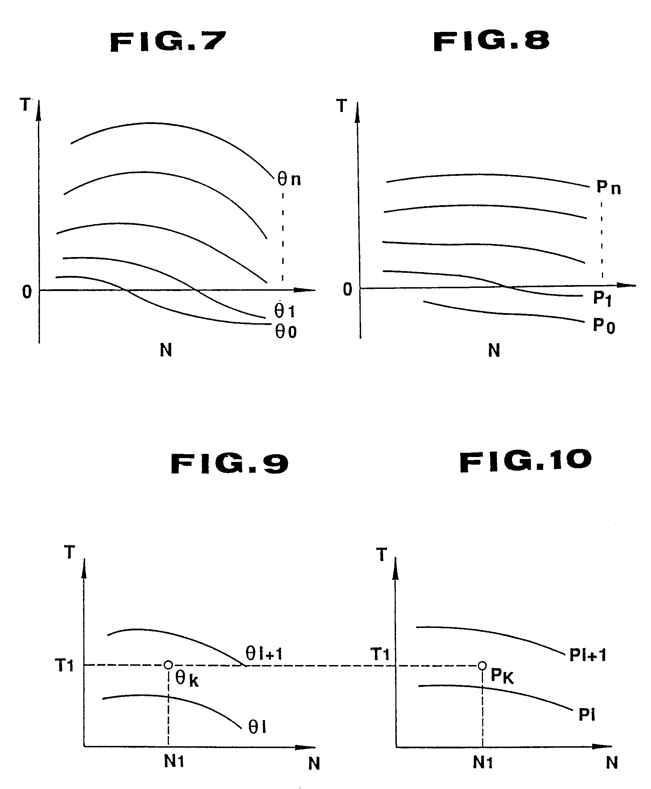

In the shown embodiment, the low inertia power source 201 receives the torque command from an engine characteristics generator 209. The engine characteristics generator 209 is associated with a plurality of data storages 209₁, 209₂, 209₃ ... respective of the data storage stores engine output torque variation characteristics set with respect to different parameters. In the shown example, the data storage 209₁ stores the engine output torque data set in terms of the throttle valve open angle ϑ and the engine speed N, as shown in Fig. 7. On the other hand, the data storage 209₂ stores the engine output torque data set in terms of the intake vacuum pressure P and the engine speed N, as shown in Fig. 8. The engine characteristics generator 209 receives the engine speed indicative data N and the throttle valve open angle data ϑ. Therefore, basic simulated engine output torque data is derived on the basis of the engine output torque variation characteristics stored in the data storage 209₁. For example, as seen from Fig. 9, assuming that the throttle valve open angle is ϑₖ and the engine speed is N₁, the simulated engine output torque becomes T₁, as seen from Fig. 9. On the other hand, when the simulated engine output torque is T₁ and the engine speed N is N, the corresponding intake vacuum pressure data Pₖ can be derived from the engine output variation characteristics stored in the data storage 209₂. Therefore, the engine characteristics generator 209 can output the intake air pressure indicative data P in addition to the torque command T.

In the shown embodiment, the torque command T generated by the engine characteristics generator 209 is supplied to the low inertia power source 201 for controlling output torque of the latter. The engine characteristics generator 209 further outputs the intake vacuum indicative data to a pressure generating actuator 212 which may have the same construction as that in the former embodiment. Therefore, the pressure corresponding to the intake vacuum pressure can be supplied to the automatic power transmission 203 connected to the dummy load 205. Therefore, in the shown embodiment, bench testing of the automatic power transmission 203 is possible even when the parameters used for shift control are different from those input to the engine characteristics generator 209.

As can be seen from the above, the bench testing apparatus according to the present invention successfully simulates the automotive internal combustion engine. Also, the bench testing apparatus according to the present invention enables bench testing of automatic power transmissions even when the parameters to be used for controlling shifting of the transmission gear ratio are different from that supplied to the engine characteristics generator.

## Claims

1. A bench testing apparatus for testing a vehicular component (3, 103, 203) to be associated with an automotive internal combustion engine, said apparatus comprising a driving source adapted to drive said vehicular component and a dummy load drivable by an output of said vehicular component, the operational state of said vehicular component (3, 103, 203) being controlled in dependence upon preselected control parameters, characterized in that said bench testing apparatus comprises:
a) a low rotational inertia driving source (1, 101, 201) which is constructed to generate a driving torque simulating an engine output, said driving source (1, 101, 201) cooperating with said associated vehicular component (3, 103, 203) to be tested for supplying said driving torque and having an electric motor and a speed increasing device so that a low rotational inertia equivalent to a rotational inertia of the automotive combustion engine is achieved;
b) an engine characteristics generator (9, 109, 209) which is constructed to receive data simulating operation of said internal combustion engine for the derivation of a control signal for commanding an output torque of said low inertia driving source (1, 101, 201) according to a predetermined engine output torque variation characteristic which is memorized in terms of said simulating data; and
c) means (6, 7, 8, 10; 110, 111, 112, 113, 114; 212) for generating at least one control parameter associated with a simulated engine operating condition and for using said control parameter to control said associated vehicular component.

2. A bench testing apparatus for testing a vehicular component as claimed in claim 1, characterized in that said data simulating engine operation is provided as a value of a physical force (P).

3. A bench testing apparatus for testing a vehicular component as claimed in claim 2, characterized in that said data simulating engine operation is an intake vacuum pressure (Po, P1,...,Pn).

4. A bench testing apparatus for testing a vehicular component as claimed in claim 4, characterized in that said vehicular component is a power transmission (3) and that said data simulating engine operation is engine speed data (N) and a throttle valve opening angle data (Θ).

5. A bench testing apparatus for testing a vehicular component as claimed in claim 4, characterized in that said engine output torque variation characteristic is set in terms of a steady state of the engine at a predetermined standard environmental condition.

6. A bench testing apparatus for testing a vehicular component as claimed in claim 5, characterized in that said means (6) for generating at least one control parameter associated with a simulated engine operating condition is responsive to simulated data indicative of an engine environmental condition for deriving a correction value based on the environmental condition so as to correct the said control signal generated by said engine characteristics generator (9).

7. A bench testing apparatus for testing a vehicular component as claimed in claim 5 or 6, characterized in that said engine environmental condition is atmospheric presssure and said correction value is derived from a difference between an atmospheric pressure represented by said engine environmental condition indicative data and a standard pressure defining said predetermined standard environmental condition.

8. A bench testing apparatus for testing a vehicular component as claimed in claim 7, characterized in that said correction value is provided as a correction coefficient.

9. A method for simulating operation of an automotive internal combustion engine, characterized by the following steps of:
a) generating an engine output torque simulating driving torque by means of a low inertia driving source (1, 101, 201);
b) deriving a control signal for commanding an output torque of said low inertia driving source (1, 101, 201) in terms of given engine simulating parameters according to a predetermined engine output torque variation characteristic which is set in terms of said engine simulating parameters for simulating engine operation at a predetermined engine driving condition represented by said given engine simulating parameters; and
c) deriving a correction value based on an environmental condition for correcting said control signal.

## Patentansprüche

1. Prüfstandvorrichtung zum Testen einer Fahrzeugkomponente (3, 103, 203), die mit einem Kraftfahrzeugverbrennungsmotor verbunden werden soll, wobei die Vorrichtung eine Antriebsquelle, die ausgelegt ist, die Fahrzeugkomponente anzutreiben, und eine von einem Ausgang der Fahrzeugkomponente antreibbare Ersatzlast umfaßt, wobei der Betriebszustand der Fahrzeugkomponente (3, 103, 203) in Abhängigkeit von vorausgewählten Steuerparametern gesteuert wird, dadurch gekennzeichnet, daß die Prüfstandvorrichtung umfaßt:
a) eine Antriebsquelle (1, 101, 201) niedriger Rotationsträgheit, die ausgebildet ist, ein einen Motorausgang simulierendes Antriebsdrehmoment zu erzeugen, wobei die Antriebsquelle (1, 101, 201) mit der zugeordneten, zu testenden Fahrzeugkomponente (3, 103, 203) zusammenarbeitet, um das Antriebsdrehmoment zu liefern, und mit einem Elektromotor und einem Geschwindigkeitserhöhungsgerät, so daß eine zu einer Rotationsträgheit des Kraftfahrzeugverbrennungsmotors äquivalente niedrige Rotationsträgheit erzielt wird;
b) einen Motorcharakteristikengenerator (9, 109, 209), der ausgebildet ist, den Betrieb des Verbrennungsmotors simulierende Daten zu empfangen, um ein Steuersignal zum Befehl eines Ausgangsdrehmoments der Antriebsquelle (1, 101, 201) niedriger Trägheit gemäß einer vorbestimmten Motorausgangsdrehmomentvariationscharakteristik zu ermitteln, die in Form der Simulationsdaten gespeichert ist; und
c) Mittel (6, 7, 8, 10; 110, 111, 112, 113, 114; 212) zum Erzeugen von zumindest einem einer simulierten Motorbetriebsbedingung zugeordneten Steuerparameter und zum Verwenden dieses Steuerparameters zur Steuerung der zugeordneten Fahrzeugkomponente.

2. Prüfstandvorrichtung zum Testen einer Fahrzeugkomponente nach Anspruch 1, dadurch gekennzeichnet, daß das den Motorbetrieb simulierende Datum als ein Wert einer physikalischen Kraft (P) vorgesehen ist.

3. Prüfstandvorrichtung zum Testen einer Fahrzeugkomponente nach Anspruch 2, dadurch gekennzeichnet, daß das den Motorbetrieb simulierende Datum ein Einlaßvakuumdruck (Po, P1, ..., Pn) ist.

4. Prüfstandvorrichtung zum Testen einer Fahrzeugkomponente nach Anspruch 4, dadurch gekennzeichnet, daß die Fahrzeugkomponente ein Leistungsgetriebe (3) ist und daß das den Motorbetrieb simulierende Datum das Motorgeschwindigkeitsdatum (N) und ein Drosselklappenventilöffnungswinkeldatum (Θ) ist.

5. Prüfstandvorrichtung zum Testen einer Fahrzeugkomponente nach Anspruch 4, dadurch gekennzeichnet, daß die Motorausgangsdrehmomentvariationscharakteristik in Form eines stationären Zustands des Motors bei einer vorbestimmten Umgebungsstandardbedingung eingestellt ist.

6. Prüfstandvorrichtung zum Testen einer Fahrzeugkomponente nach Anspruch 5, dadurch gekennzeichnet, daß das Mittel (6) zum Erzeugen von zumindest einem einer simulierten Motorbetriebsbedingung zugeordneten Steuerparameter auf simulierte, eine Motorumgebungsbedingung anzeigende Daten anspricht, um einen auf der Umgebungsbedingung basierenden Korrekturwert zu ermitteln, um das Steuersignal, das von dem Motorcharakteristikengenerator (9) erzeugt wird, zu korrigieren.

7. Prüfstandvorrichtung zum Testen einer Fahrzeugkomponente nach Anspruch 5 oder 6, dadurch gekennzeichnet, daß die Motorumgebungsbedingung der atmosphärische Druck ist und der Korrekturwert aus einer Differenz zwischen einem atmosphärischen Druck, repräsentiert von dem Motorumgebungsbedingungsanzeigedatum, und einem Standarddruck, der die vorbestimmte Standardumgebungsbedingung definiert, ist.

8. Prüfstandvorrichtung zum Testen einer Fahrzeugkomponente nach Anspruch 7, dadurch gekennzeichnet, daß der Korrekturwert als ein Korrekturkoeffizient bereitgestellt wird.

9. Verfahren zur Simulation des Betriebs eines Kraftfahrzeugverbrennungsmotors, gekennzeichnet durch die folgenden Schritte:
a) der Erzeugung eines Motorausgangsdrehmomentsimulationsantriebsdrehmoments mittels einer Antriebsquelle (1, 101, 201) niedriger Trägheit;
b) der Ermittlung eines Steuersignals zum Befehlen eines Ausgangsdrehmoments der Antriebsquelle (1, 101, 201) niedriger Trägheit in Form gegebener Motorsimulationsparameter gemäß einer vorgegebenen Motorausgangsdrehmomentvariationscharakteristik, die in Form der Motorsimulationsparameter eingestellt ist, um den Motorbetriebs bei einer vorbestimmten Motorantriebsbedingung zu simulieren, die von den gegebenen Motorsimulationsparametern repräsentiert wird; und
c) der Ermittlung eines auf einer Umgebungsbedingung basierenden Korrekturwertes zur Korrektur des Steuersignals.

## Revendications

1. Appareil d'essai au banc pour essayer un composant de véhicule (3, 103, 203) devant être associé à un moteur à combustion interne d'automobile, ledit appareil comportant une source d'entraînement conçue pour entraîner ledit composant de véhicule et une charge fictive pouvant être entraînée par un arbre de sortie dudit composant de véhicule, l'état de fonctionnement dudit composant de véhicule (3, 103, 203) étant contrôlé en fonction de paramètres de commande préalablement choisis, caractérisé en ce que ledit appareil d'essai au banc comporte :
a) une source d'entraînement à faible inertie de rotation (1, 101, 201) qui est réalisée pour générer un couple d'entraînement simulant une puissance de sortie de moteur, ladite source d'entraînement (1, 101, 201) coopérant avec ledit composant de véhicule associé (3, 103, 203) à essayer pour délivrer ledit couple d'entraînement et possédant un moteur électrique et un dispositif d'accroissement de vitesse de sorte qu'une faible inertie de rotation équivalente à une inertie de rotation du moteur à combustion interne d'automobile est obtenue ;
b) un générateur de caractéristiques de moteur (9, 109, 209) qui est réalisé pour recevoir des données simulant le fonctionnement dudit moteur à combustion interne pour l'obtention d'un signal de commande pour commander un couple de sortie de ladite source d'entraînement à faible inertie (1, 101, 201) conformément à une caractéristique de variation du couple de sortie du moteur prédéterminée qui est mémorisée en fonction desdites données de simulation ; et
c) des moyens (6, 7, 8, 10 ; 110, 111, 112, 113, 114 ; 212) pour générer au moins un paramètre de commande associé à une condition de fonctionnement du moteur simulée et pour utiliser ledit paramètre de commande pour contrôler ledit composant de véhicule associé.

2. Appareil d'essai au banc pour essayer un composant de véhicule selon la revendication 1, caractérisé en ce que lesdites données simulant un fonctionnement du moteur sont fournies en tant que valeur d'une force physique (P).

3. Appareil d'essai au banc pour essayer un composant de véhicule selon la revendication 2, caractérisé en ce que lesdites données simulant le fonctionnement d'un moteur sont une dépression d'admission (Pₒ, P₁,..., Pₙ).

4. Appareil d'essai au banc pour essayer un composant de véhicule selon la revendication 3, caractérisé en ce que ledit composant de véhicule est une boîte de vitesses (3) et en ce que lesdites données simulant un fonctionnement du moteur sont des données de vitesse du moteur (N) et des données d'angle d'ouverture de papillon des gaz (ϑ).

5. Appareil d'essai au banc pour essayer un composant de véhicule selon la revendication 4, caractérisé en ce que ladite caractéristique de variation du couple de sortie du moteur est fixée en fonction d'un régime permanent du moteur pour une condition d'environnement normalisée prédéterminée.

6. Appareil d'essai au banc pour essayer un composant de véhicule selon la revendication 1, caractérisé en ce que lesdits moyens (6) pour générer au moins un paramètre de commande associé à une condition de fonctionnement du moteur simulée sont sensibles à des données simulées représentatives d'une condition d'environnement du moteur pour obtenir une valeur de correction en fonction de la condition d'environnement de manière à corriger ledit signal de commande généré par ledit générateur de caractéristiques de moteur (9).

7. Appareil d'essai au banc pour essayer un composant de véhicule selon la revendication 5 ou 6, caractérisé en ce que ladite condition d'environnement du moteur est la pression atmosphérique et ladite valeur de correction est obtenue à partir d'une différence entre une pression atmosphérique représentée par lesdites données représentatives de la condition d'environnement du moteur et une pression normalisée définissant ladite condition d'environnement normalisée prédéterminée.

8. Appareil d'essai au banc pour essayer un composant de véhicule selon la revendication 7, caractérisé en ce que ladite valeur de correction est fournie sous la forme d'un coefficient de correction.

9. Procédé de simulation du fonctionnement d'un moteur à combustion interne d'automobile, caractérisé par les étapes suivantes consistant à :
a) générer un couple d'entraînement simulant un couple de sortie de moteur à l'aide d'une source d'entraînement à faible inertie (1, 101, 201) ;
b) obtenir un signal de commande pour commander un couple de sortie de ladite source d'entraînement à faible inertie (1, 101, 201) en fonction de paramètres de simulation de moteur donnés selon une caractéristique de variation de couple de sortie de moteur prédéterminée qui est fixée en fonction desdits paramètres de simulation du moteur pour simuler un fonctionnement du moteur dans une condition d'entraînement de moteur prédéterminée représentée par lesdits paramètres de simulation de moteur donnés ; et
c) obtenir une valeur de correction en fonction d'une condition d'environnement pour corriger ledit signal de commande.
